# EUROPEAN PATENT APPLICATION

(11) **EP 4 749 522 A1**
(43) Date of publication of application: **27.05.2026**
(21) Application number: 24843043.1
(22) Date of filing: 10.07.2024
(51) Int. Cl.: G06N 3/04, G06F 21/16

(54) **INFORMATION PROCESSING SYSTEM, PROGRAM, AND INFORMATION PROCESSING METHOD**

(30) Priority: 20.07.2023 JP 2023118532
(71) Applicant: Softbank Corp., Tokyo 105-7529 (JP)
(72) Inventor: ISHIWAKA Yuko, Tokyo 105-7529 (JP); SUDA Kazuto, Tokyo 105-7529 (JP); OWADA Minoru, Tokyo 105-7529 (JP)
(74) Representative: Dilg, Haeusler, Schindelmann Patentanwaltsgesellschaft mbH
(86) International application number: PCT/JP2024/024967
(87) International publication number: WO 2025/018251

(57) **Abstract**

Provided an information processing system including: an embedded information acquisition unit which acquires embedded information; a generation unit which generates an embedded neural network in which the embedded information is embedded into an element of a neural network; an input information acquisition unit which acquires user input information input by a user using the neural network; and a network management unit which restricts use of the neural network by the user when the network-related information embedded into the embedded neural network does not match the user input information.

## Description

### TECHNICAL FIELD

The present invention relates to an information processing system, a program, and an information processing method.

### BACKGROUND ART

Patent Document 1 describes a neural network.

### RELATED ART DOCUMENTS

### PATENT DOCUMENT

Patent Document 1: Japanese Patent Application Publication No. 2020-201904

### GENERAL DISCLOSURE

According to an embodiment of the present invention, provided is an information processing system. The information processing system may include an embedded information acquisition unit which acquires embedded information. The information processing system may include a generation unit which generates an embedded neural network in which the embedded information is embedded into an element of a neural network.

In the information processing system, the generation unit may generate the embedded neural network in which the embedded information is embedded into at least one of a node, a weight, a bias, a layer, or a function of the neural network. The generation unit may generate the embedded neural network in which the embedded information is embedded into at least one of an input layer, a hidden layer, and an output layer of the neural network. The generation unit may embed the embedded information in a distributed manner into a plurality of elements among a plurality of nodes, a plurality of weights, a plurality of biases, a plurality of activation functions, an input layer, a hidden layer, and an output layer of the neural network. The embedded information may be a numerical value, and the generation unit may generate the embedded neural network in which some weights among a plurality of weights of the neural network are regarded as the embedded information. The generation unit may determine a number of at least one weight for embedding the embedded information, based on a size of the embedded information. The generation unit may determine a number of at least one weight for embedding the embedded information, based on a number of at least one piece of the embedded information. The generation unit may determine a number of at least one weight for embedding the embedded information, based on a size of the embedded information and a number of at least one piece of the embedded information. The generation unit may regard, as the embedded information, the some weights among the plurality of weights of the neural network which is untrained, and then execute training so as not to change the some weights to generate the embedded neural network.

In any of the information processing systems, the generation unit may generate the embedded neural network in which the some weights among the plurality of weights of the neural network having been trained are regarded as the embedded information, and reconstruction information capable of reconstructing the some weights from the embedded information. The information processing system may include a provision unit which provides the embedded neural network generated by the generation unit and the reconstruction information.

In any of the information processing systems, the generation unit may identify the some weights each having a value less than or equal to a predetermined threshold among the plurality of weights of the neural network having been trained, and generate the embedded neural network in which the some weights are regarded as the embedded information, and weight position information indicating a position of each of the some weights in the embedded neural network.

In any of the information processing systems, the embedded information acquisition unit may acquire the embedded information generated by reversibly converting target information, and the generation unit may generate inverse conversion information indicating a method of converting the embedded information into the target information.

In any of the information processing systems, the embedded information may be a numerical value, and the generation unit may generate the embedded neural network in which some biases among a plurality of biases of the neural network are regarded as the embedded information. The generation unit may determine a number of at least one bias for embedding the embedded information, based on a size of the embedded information. The generation unit may determine a number of at least one bias for embedding the embedded information, based on a number of at least one piece of the embedded information. The generation unit may determine a number of at least one bias for embedding the embedded information, based on a size of the embedded information and a number of at least one piece of the embedded information. The generation unit may generate the embedded neural network in which the some biases among the plurality of biases of the neural network are regarded as the embedded information, and reconstruction information capable of reconstructing the some biases from the embedded information. When the neural network does not require a bias, the generation unit may embed the embedded information into a dummy bias of the neural network.

In any of the information processing systems, the embedded information may be a numerical value, and the generation unit may generate the embedded neural network in which the embedded information is embedded into some layers among a plurality of layers of the neural network. The generation unit may determine a number of at least one layer for embedding the embedded information, based on a size of the embedded information. The generation unit may determine a number of at least one layer for embedding the embedded information, based on a number of at least one piece of the embedded information. The generation unit may determine a number of at least one layer for embedding the embedded information, based on a size of the embedded information and a number of at least one piece of the embedded information. The generation unit may generate the embedded neural network in which the embedded information is embedded into the some layers among the plurality of layers of the neural network, and layer position information indicating a position of each of the some layers in the embedded neural network. The generation unit may generate the embedded neural network in which the embedded information is embedded into the some layers among the plurality of layers of the neural network, and reconstruction information capable of reconstructing data before being applied to the some layers, from the data applied to the some layers.

In any of the information processing systems, the embedded information may be a numerical value, and the generation unit may generate the embedded neural network in which the embedded information is embedded into some nodes among a plurality of nodes of the neural network. The generation unit may generates the embedded neural network in which the embedded information is embedded into a plurality of some nodes among a plurality of nodes of the neural network. The generation unit may determine a number of at least one node for embedding the embedded information, based on a size of the embedded information. The generation unit may determine a number of at least one node for embedding the embedded information, based on a number of at least one piece of the embedded information. The generation unit may determine a number of at least one node for embedding the embedded information, based on a size of the embedded information and a number of at least one piece of the embedded information. The generation unit may generate the embedded neural network in which the embedded information is embedded into some nodes that are not linked to another node, among a plurality of nodes of the neural network. The generation unit may embed embedded information by using node numbers of some nodes that are not linked to another node, among a plurality of nodes of the neural network. The generation unit may embeds the embedded information into the neural network by generating application information that becomes embedded information when applied to a numerical value configured by a node number extracted according to an extraction rule of sequentially extracting nodes that are not linked to another node. The extraction rule may indicate extraction from an input layer side toward an output layer side, starting from a node on an upper side toward a node on a lower side.

In any of the information processing systems, the embedded information may be a numerical value, and the generation unit may generate the embedded neural network in which the embedded information is embedded into a function of the neural network. The generation unit may generate the embedded neural network in which the embedded information is embedded into a function of the neural network. The generation unit may determine a number of at least one function for embedding the embedded information, based on a size of the embedded information. The generation unit may determine a number of at least one function for embedding the embedded information, based on a number of at least one piece of the embedded information. The generation unit may determine a number of at least one function for embedding the embedded information, based on a size of the embedded information and a number of at least one piece of the embedded information. The generation unit may generate the embedded neural network in which the embedded information is embedded into an activation function of the neural network. The generation unit may generate the embedded neural network in which embedded information is embedded into some activation functions among a plurality of activation functions of the neural network, and reconstruction information capable of reconstructing the some activation functions from the embedded information. The generation unit may generate the embedded neural network in which the embedded information is embedded into a loss function of the neural network. The generation unit may generate the embedded neural network in which the embedded information is embedded into a loss function of the neural network and reconstruction information capable of reconstructing the loss function from the embedded information.

In any of the information processing systems, the generation unit may generate the embedded neural network in which network-related information related to the neural network is embedded as the embedded information into an element of the neural network. The network-related information may include at least one of generation source information indicating a generation source of the embedded neural network, a signature of the embedded neural network, authentication information for authenticating a user of the embedded neural network, or a non-fungible token (NFT) of the embedded neural network. The network-related information may include at least one of input application information applied to an input of the embedded neural network, output application information applied to an output of the embedded neural network, or tuning information used for tuning the embedded neural network. The generation unit may generate the embedded neural network in which a signature of the neural network is embedded as the embedded information into an element of the neural network. Any of the information processing systems may include an input information acquisition unit which acquires user input information input by a user using the embedded neural network; and a network management unit which restricts use of the neural network by the user when the network-related information embedded into the embedded neural network does not match the user input information.

In any of the information processing systems, the network management unit may prohibit use of the neural network by the user when the network-related information embedded into the embedded neural network does not match the user input information. The network management unit may output, to the user, information different from output information output from the embedded neural network when the network-related information embedded into the embedded neural network does not match the user input information.

According to an embodiment of the present invention, provided is a program which causes a computer to function as the information processing system.

According to an embodiment of the present invention, provided is an information processing method which is executed by a computer. The information processing method may include acquiring embedded information. The information processing method may include generating an embedded neural network in which the embedded information is embedded into an element of a neural network.

The summary clause does not necessarily describe all necessary features of the embodiments of the present invention. The present invention may also be a sub-combination of the features described above.

### BRIEF DESCRIPTION OF THE DRAWINGS

Fig. 1 schematically illustrates an example of an information processing system 10.
Fig. 2 schematically illustrates an example of a neural network 300.
Fig. 3 is an explanatory diagram for explaining an example of a method of embedding embedded information in the neural network 300 by the information processing system 10.
Fig. 4 is an explanatory diagram for explaining an example of the method of embedding the embedded information in the neural network 300 by the information processing system 10.
Fig. 5 is an explanatory diagram for explaining an example of the method of embedding the embedded information in the neural network 300 by the information processing system 10.
Fig. 6 is an explanatory diagram for explaining an example of the method of embedding the embedded information in the neural network 300 by the information processing system 10.
Fig. 7 schematically illustrates an example of a functional configuration of a generation apparatus 100.
Fig. 8 schematically illustrates an example of a functional configuration of an execution apparatus 200.
Fig. 9 schematically illustrates an example of a hardware configuration of a computer 1200 functioning as the generation apparatus 100 or the execution apparatus 200.

### DESCRIPTION OF EXEMPLARY EMBODIMENTS

The present invention will be described below through embodiments of the invention, but the following embodiments do not limit the invention according to the claims. In addition, not all combinations of features described in the embodiments are necessarily essential to a solution of the invention.

In recent years, research on a neural network has progressed, and a wide variety of neural networks have been generated. It is desirable to provide a technique for promoting use of a neural network. For example, when an effective neural network is generated, it is desirable to provide a mechanism for preventing the neural network from being stolen or improperly used. In addition, in order to prevent a user from suffering any damage by using a neural network without being aware that it has been generated in an unauthorized manner, it is desirable to provide a technology capable of distinguishing between a neural network generated in an authorized manner and a neural network generated in an unauthorized manner. In the information processing system 10 according to the present embodiment, embedding information into a neural network contributes to improving usefulness of the neural network.

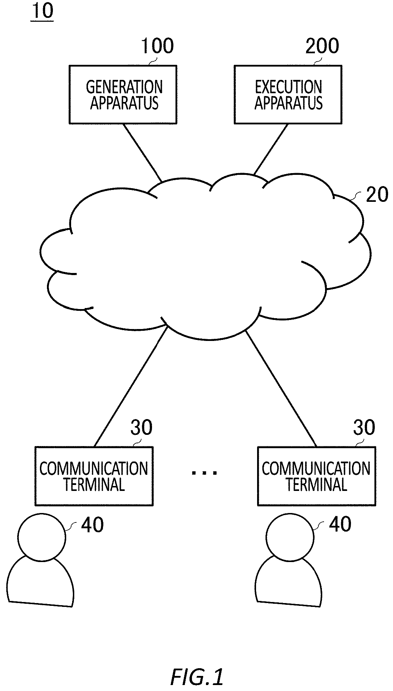

Fig. 1 schematically illustrates an example of the information processing system 10. The information processing system 10 includes a generation apparatus 100. The information processing system 10 may be a system realized only by the generation apparatus 100. The information processing system 10 may include an execution apparatus 200. The information processing system 10 may be a system realized by the generation apparatus 100 and the execution apparatus 200. The information processing system 10 may further include a communication terminal 30.

The generation apparatus 100 and the execution apparatus 200 may communicate via a network 20. The generation apparatus 100 and the communication terminal 30 may communicate via the network 20. The execution apparatus 200 and the communication terminal 30 may communicate via the network 20.

The network 20 may include the Internet. The network 20 may include a local area network (LAN). The network 20 may include a mobile communication network. The mobile communication network may conform to any of a long term evolution (LTE) communication standard, a fifth generation (5G) communication standard, a third generation (3G) communication standard, or a communication standard after a sixth generation (6G) communication standard.

The generation apparatus 100 may be connected to the network 20 via a wired connection. The generation apparatus 100 may be connected to the network 20 via a wireless connection. The generation apparatus 100 may be connected to the network 20 via a wireless base station. The generation apparatus 100 may be connected to the network 20 via a WI-FI (registered trademark) access point.

The execution apparatus 200 may be connected to the network 20 via a wired connection. The execution apparatus 200 may be connected to the network 20 via a wireless connection. The execution apparatus 200 may be connected to the network 20 via a wireless base station. The execution apparatus 200 may be connected to the network 20 via a WI-FI access point.

The generation apparatus 100 and the execution apparatus 200 may be integrated. That is, the generation apparatus 100 may have a function of the execution apparatus 200.

The communication terminal 30 may be connected to the network 20 via a wired connection. The communication terminal 30 may be connected to the network 20 via a wireless connection. The communication terminal 30 may be connected to the network 20 via a wireless base station. The communication terminal 30 may be connected to the network 20 via a WI-FI access point.

The generation apparatus 100 generates an embedded neural network in which embedded information is embedded into an element of a neural network. Examples of the element of the neural network include a node, a weight, a bias, a layer, and a function of the neural network, and the like. Examples of the layer include an input layer, a hidden layer, and an output layer. Examples of the function include an activation function, a loss function, and the like. The generation apparatus 100 may generate an embedded neural network in which embedded information is embedded into at least one of a node, a weight, a bias, a layer, or a function of a neural network.

A neural network targeted by the information processing system 10 may be a deep neural network (DNN). The neural network targeted by the information processing system 10 may be a convolutional neural network (CNN). The neural network targeted by the information processing system 10 may be a recurrent neural network (RNN) or the like. In the present embodiment, a case where the neural network targeted by the information processing system 10 is a DNN will be mainly described as an example.

The generation apparatus 100 may generate an embedded neural network by embedding embedded information into an untrained neural network. The generation apparatus 100 may generate an embedded neural network by embedding embedded information into a trained neural network. The embedded neural network may be a neural network for any application. The embedded information may be any information.

For example, the embedded information is network-related information related to the embedded neural network. Examples of the network-related information include generation source information indicating a generation source of the embedded neural network, a signature of the embedded neural network, authentication information for authenticating a user of the embedded neural network, a non-fungible token (NFT) of the embedded neural network, and the like. Examples of the network-related information include input application information applied to an input of the embedded neural network, output application information applied to an output of the embedded neural network, tuning information used for tuning the embedded neural network, and the like. The network-related information may be any other information as long as the information is related to the embedded neural network. The embedded information may be information that is not related to the embedded neural network. For example, the embedded information may be image information, audio information, text information, key information, and the like. These are examples, and the embedded information may be information other than these.

As a specific example, the generation apparatus 100 generates an embedded neural network into which the generation source information is embedded. Accordingly, even after the neural network circulates, it is possible to confirm the generation source of the neural network by referring to information embedded into the neural network.

A person who does not know where and how the embedded information is embedded into the embedded neural network cannot remove the embedded information from the embedded neural network or tamper with the embedded information. When the embedded information is made known only to an authorized user who can use the embedded neural network, only a person who knows the embedded information can be allowed to use the embedded neural network in an authorized manner.

The generation apparatus 100 may generate extraction method information directly or indirectly indicating an extraction method of extracting the embedded information from the embedded neural network. The extraction method information may include an extraction method of extracting the embedded information from the embedded neural network. The extraction method information may be information indicating where and how the embedded information is embedded into the embedded neural network. The generation apparatus 100 may create a network configuration file including the extraction method information.

The generation apparatus 100 may provide the generated embedded neural network to the execution apparatus 200. The generation apparatus 100 may provide the embedded neural network and the extraction method information to the execution apparatus 200. The generation apparatus 100 may provide the network configuration file including the extraction method information to the execution apparatus 200.

The execution apparatus 200 may provide a service using the embedded neural network to a user 40. For example, when the embedded neural network is a neural network for performing face authentication, the execution apparatus 200 executes the face authentication of the user 40 by receiving a face image including a face of the user 40 from the communication terminal 30 used by the user 40, and inputting the face image to the embedded neural network. The communication terminal 30 may be a smartphone, a tablet terminal, a personal computer (PC), and the like possessed by the user 40. The communication terminal 30 may be a terminal, which is arranged in any place such as a store, for authenticating the user 40.

The execution apparatus 200 may restrict use of the embedded neural network by the user 40 which is not authorized. For example, first, only the authorized user 40 is notified of the embedded information. Then, the execution apparatus 200 acquires user input information input by the user 40, and when the embedded information embedded into the embedded neural network and the user input information match, executes face authentication of the user 40 using the embedded neural network as usual, and when the embedded information and the user input information do not match, does not start the face authentication or inputs the face image of the user 40 to the embedded neural network and outputs, to the user 40, information different from output information output from the embedded neural network.

The generation apparatus 100 may provide the generated embedded neural network to the communication terminal 30. The generation apparatus 100 may provide the embedded neural network and the extraction method information to 30. The generation apparatus 100 may provide the network configuration file including the extraction method information to the communication terminal 30.

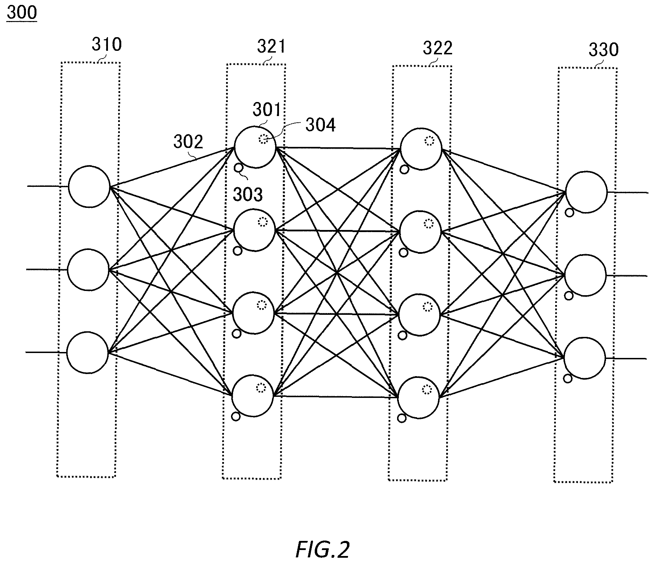

Fig. 2 schematically illustrates an example of a neural network 300. The neural network 300 illustrated in Fig. 2 includes an input layer 310, a hidden layer 321, a hidden layer 322, and an output layer 330. The network configuration file of the neural network 300 is, for example, "3, 4, 4, 3" which represents a layer structure by a sequence of numbers. The network configuration file of the neural network 300 is, for example, "Input 3, Hidden 4, 4, Output 3" which represents the layer structure by a sequence of numbers with symbols. A number and a configuration of at least one layer included in the neural network 300 are not limited to the example illustrated in Fig. 2.

The neural network 300 illustrated in Fig. 2 includes a plurality of nodes 301, a plurality of weights 302, a plurality of biases 303, and a plurality of activation functions 304. The neural network 300 may not include the bias 303. The neural network 300 may not include the activation function 304.

In the example of the neural network 300 illustrated in Fig. 2, the generation apparatus 100 may embed the embedded information into some of the plurality of nodes 301. The generation apparatus 100 may embed the embedded information into some of the plurality of weights 302. The generation apparatus 100 may embed the embedded information into some of the plurality of biases 303. The generation apparatus 100 may embed the embedded information into some of the plurality of activation functions 304. The generation apparatus 100 may embed the embedded information in a distributed manner into a plurality of elements among the plurality of nodes 301, the plurality of weights 302, the plurality of biases 303, the plurality of activation functions 304, the input layer 310, the hidden layer 321, the hidden layer 322, and the output layer 330.

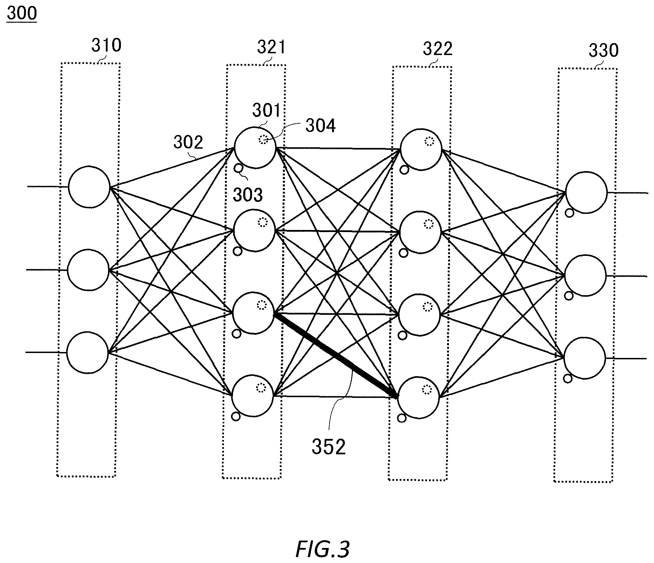

Fig. 3 is an explanatory diagram for explaining an example of a method of embedding embedded information in the neural network 300 by the information processing system 10. Here, a case where the generation apparatus 100 embeds the embedded information into one weight 302 among the plurality of weights 302 will be described as an example.

In the example illustrated in Fig. 3, the generation apparatus 100 embeds the embedded information into the weight 302 (which may be described as a target weight 352) from a third node 301 of the hidden layer 321 that is a second layer to a fourth node 301 of the hidden layer 322 that is a third layer. The embedded information may be a sequence of numbers. The embedded information may be a numerical value. The embedded information may be in ASCII code.

The embedded information may be target information itself to be embedded. The generation apparatus 100 may include weight position information indicating a position of the target weight 352 in the network configuration file of the neural network 300. In the example illustrated in Fig. 3, the generation apparatus 100 may include, in the network configuration file, "2, 3, 3, 4" indicating that the embedded information is embedded from the third node 301 of the second layer to the fourth node 301 of the third layer.

The embedded information may be conversion information generated by reversibly converting the target information. For example, the conversion information may be a value obtained by adding a specific numerical value to the target information. The generation apparatus 100 may include the weight position information indicating the position of the target weight 352 and the specific numerical value in the network configuration file of the neural network 300. In the example illustrated in Fig. 3, the generation apparatus 100 may include "2, 3, 3, 4, the specific numerical value" in the network configuration file. The target information can be acquired by subtracting the specific numerical value from the embedded information extracted from the "2, 3, 3, 4" of the neural network 300. The conversion information may be a value obtained by subtracting a specific numerical value from the target information. In addition, the conversion information may be a value calculated by applying the target information to a specific mathematical expression. In this case, the generation apparatus 100 may include the weight position information indicating the position of the target weight 352 and the specific mathematical expression in the network configuration file of the neural network 300.

For example, after regarding the target weight 352 of an untrained neural network as embedded information, the generation apparatus 100 executes training so as not to change the target weight 352, and generates an embedded neural network. Accordingly, it is possible to generate the embedded neural network in which the target weight 352 is embedded information.

The generation apparatus 100 generates, for example, an embedded neural network in which the target weight 352 of a trained neural network is regarded as embedded information, and reconstruction information capable of reconstructing the target weight 352 from the embedded information. For example, when the target weight 352 of the trained neural network is 0.5 and the embedded information is 0.18, the generation apparatus 100 sets the target weight 352 to 0.18 and generates reconstruction information including 0.32 obtained by subtracting 0.18 from 0.5. Accordingly, when processing using the neural network 300 is actually executed with the embedded information embedded into the neural network 300, the target weight 352 can be set to 0.5 that is a correct weight value calculated by adding 0.32 that is the reconstruction information to 0.18 that is the embedded information.

For example, the generation apparatus 100 identifies one weight having a value lower than a predetermined threshold among a plurality of weights of the trained neural network, and generates an embedded neural network in which the one weight is regarded as embedded information and weight position information indicating a position corresponding to some weights in the neural network. As a specific example, the generation apparatus 100 identifies one weight having a value of 0 among the plurality of weights of the trained neural network, and generates an embedded neural network in which the one weight is regarded as embedded information and weight position information of the one weight. Accordingly, when processing using the neural network 300 is actually executed with the embedded information embedded into the neural network 300, it is possible to realize that the processing is executed while ignoring the weight at the position indicated by the weight position information.

Fig. 3 illustrates a case where the embedded information is embedded into one weight 302 among the plurality of weights 302, but the present invention is not limited thereto. The generation apparatus 100 may embed the embedded information in a distributed manner into a plurality of some weights 302 of the plurality of weights 302. The generation apparatus 100 may embed a plurality of pieces of embedded information into a plurality of some weights 302 of the plurality of weights 302, respectively.

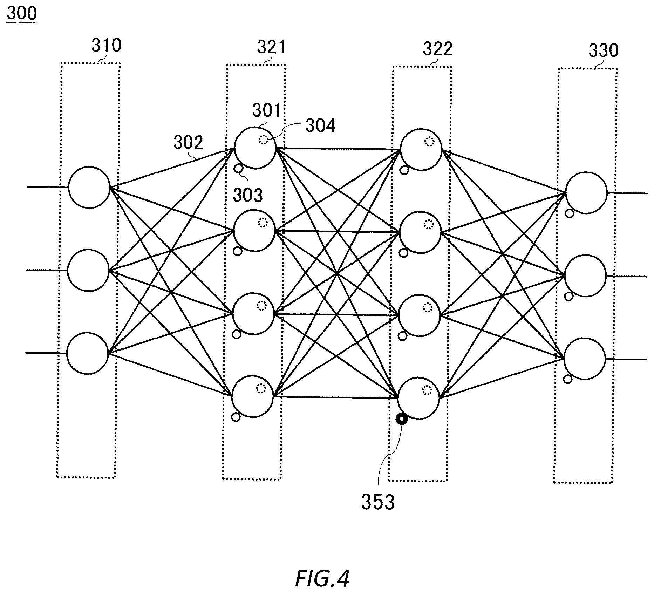

Fig. 4 is an explanatory diagram for explaining an example of a method of embedding embedded information in the neural network 300 by the information processing system 10. Here, a case where the generation apparatus 100 embeds the embedded information into one bias 303 among the plurality of biases 303 will be described as an example.

In the example illustrated in Fig. 4, the generation apparatus 100 embeds the embedded information into the bias 303 (which may be described as a target bias 353) of the fourth node 301 of the hidden layer 322 that is the third layer. The embedded information may be a sequence of numbers. The embedded information may be a numerical value. The embedded information may be in ASCII code.

The embedded information may be target information itself to be embedded. The generation apparatus 100 may include bias position information indicating a position of the target bias 353 in the network configuration file of the neural network 300. In the example illustrated in Fig. 3, the generation apparatus 100 may include, in the network configuration file, "3, 4" indicating that the embedded information is embedded into the fourth node 301 of the third layer.

The embedded information may be conversion information generated by reversibly converting the target information. For example, the conversion information may be a value obtained by adding a specific numerical value to the target information. The generation apparatus 100 may include the bias position information indicating the position of the target bias 353 and the specific numerical value in the network configuration file of the neural network 300. In the example illustrated in Fig. 4, the generation apparatus 100 may include "3, 4, the specific numerical value" in the network configuration file. The target information can be acquired by subtracting the specific numerical value from the embedded information extracted from the "3, 4" of the neural network 300. The conversion information may be a value obtained by subtracting a specific numerical value from the target information. In addition, the conversion information may be a value calculated by applying the target information to a specific mathematical expression. In this case, the generation apparatus 100 may include the bias position information indicating the position of the target bias 353 and the specific mathematical expression in the network configuration file of the neural network 300.

In a case of a neural network that does not require a bias, the generation apparatus 100 may embed embedded information into a dummy bias. In a case of a neural network that requires a bias, the generation apparatus 100 may generate an embedded neural network in which the target bias 353 is regarded as embedded information and reconstruction information capable of reconstructing the target bias 353 from the embedded information. As a specific example, when the target bias 353 is 0.5 and the embedded information is 0.18, the generation apparatus 100 generates reconstruction information including 0.32 obtained by subtracting 0.18 from 0.5 while generating an embedded neural network in which the target bias 353 is 0.18. Accordingly, when processing using the neural network 300 is actually executed with the embedded information embedded into the neural network 300, the target bias 353 can be set to 0.5 that is a correct bias value calculated by adding 0.32 that is the reconstruction information to 0.18 that is the embedded information.

Fig. 4 illustrates a case where the embedded information is embedded into one bias 303 among the plurality of biases 303, but the present invention is not limited thereto. The generation apparatus 100 may embed the embedded information in a distributed manner into a plurality of some biases 303 of the plurality of biases 303. The generation apparatus 100 may embed a plurality of pieces of embedded information into a plurality of some biases 303 of the plurality of biases 303, respectively.

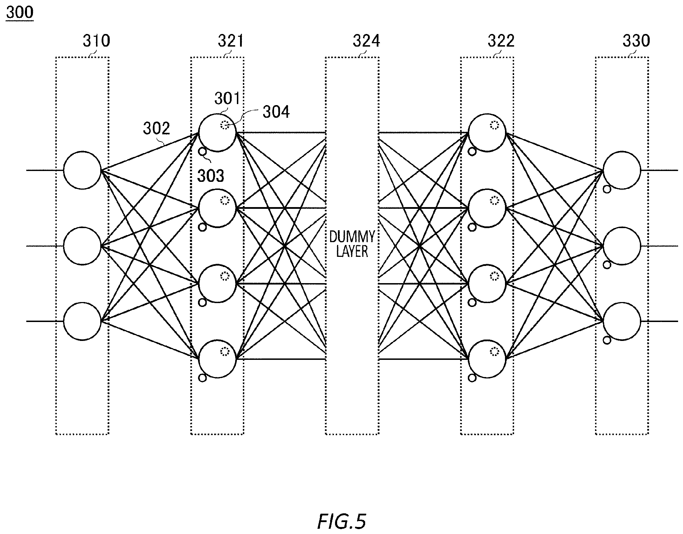

Fig. 5 is an explanatory diagram for explaining an example of a method of embedding embedded information in the neural network 300 by the information processing system 10. Here, a case where the generation apparatus 100 embeds the embedded information into one layer among the plurality of layers will be described as an example.

For example, the generation apparatus 100 generates the neural network 300 including a dummy layer 324 and embeds the embedded information into the dummy layer 324. For example, the generation apparatus 100 embeds the embedded information into at least a part of an input to the dummy layer 324 and at least a part of an output from the dummy layer 324. The generation apparatus 100 may embed the embedded information into an entire input to the dummy layer 324 and an entire output from the dummy layer 324, or may embed the embedded information into a part thereof. The generation apparatus 100 may embed the embedded information only into at least a part of the input to the dummy layer 324. The generation apparatus 100 may embed the embedded information only into at least a part of the output from the dummy layer 324.

The generation apparatus 100 may generate an embedded neural network in which embedded information is embedded into the dummy layer 324 and layer position information indicating a position of the dummy layer 324. The generation apparatus 100 may generate a network configuration file including the layer position information. The dummy layer 324 can be identified by the layer position information, the embedded information can be extracted from the embedded neural network, and when processing using the neural network 300 is actually executed, the processing can be executed while ignoring the dummy layer 324.

The generation apparatus 100 may generate an embedded neural network in which embedded information is embedded into the dummy layer 324 and reconstruction information capable of reconstructing data before being applied to the dummy layer 324 from data applied to the dummy layer 324. Accordingly, when processing using the neural network 300 is actually executed, an influence of the dummy layer 324 can be eliminated by the reconstruction information.

Fig. 5 illustrates a case where one dummy layer 324 is included in the neural network 300, but the present invention is not limited thereto. The neural network 300 may include a plurality of dummy layers 324. In this case, the generation apparatus 100 may embed the embedded information in a distributed manner into the plurality of dummy layers 324. In addition, the generation apparatus 100 may embed a plurality of pieces of embedded information into the plurality of dummy layers 324, respectively.

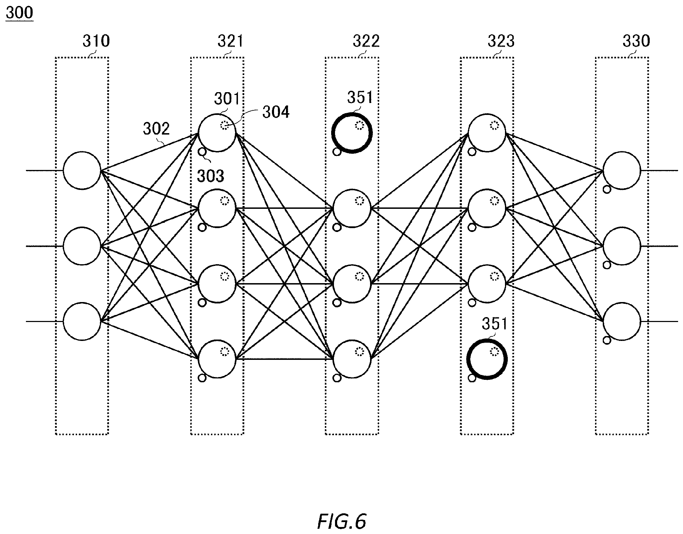

Fig. 6 is an explanatory diagram for explaining an example of a method of embedding embedded information in the neural network 300 by the information processing system 10. Here, a case where the generation apparatus 100 embeds the embedded information into a plurality of some nodes 301 among the plurality of nodes 301 will be described as an example.

In the example illustrated in Fig. 6, the generation apparatus 100 embeds the embedded information into some nodes (which may be described as target nodes 351) that are not linked to other nodes 301 among the plurality of nodes 301 of the neural network 300. The embedded information may be a sequence of numbers. The embedded information may be a numerical value.

For example, the generation apparatus 100 embeds the embedded information into a node number of the target node 351. In the example illustrated in Fig. 6, a first node of a third layer and a fourth node of a fourth layer are the target nodes 351. When a rule is to extract the nodes 301, which are not linked to another node 301, from an input layer side toward an output layer side, starting from an upper side 301 toward the node 301 on a lower side, a numerical value "3, 1, 4, 4" can be extracted. The generation apparatus 100 embeds the embedded information into the neural network 300 by generating application information that becomes the embedded information when applied to the numerical value. For example, the generation apparatus 100 generates application information that becomes the embedded information when subtracted from 3144. When the embedded information is 1800, the generation apparatus 100 generates application information including 1344 obtained by subtracting 1800 from 3144.

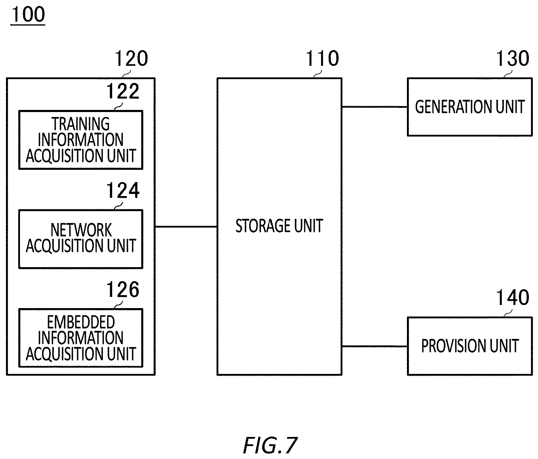

Fig. 7 schematically illustrates an example of a functional configuration of the generation apparatus 100. The generation apparatus 100 includes a storage unit 110, an acquisition unit 120, a generation unit 130, and a provision unit 140.

The acquisition unit 120 acquires various types of information. The acquisition unit 120 stores the acquired information in the storage unit 110. The acquisition unit 120 may include a training information acquisition unit 122, a network acquisition unit 124, and an embedded information acquisition unit 126.

The training information acquisition unit 122 acquires training information for training a neural network. The training information acquisition unit 122 may acquire the training information from an outside.

The network acquisition unit 124 acquires a neural network. The network acquisition unit 124 may acquire the neural network from the outside. The network acquisition unit 124 may acquire a trained neural network trained by another apparatus from the another apparatus.

The embedded information acquisition unit 126 acquires embedded information to be embedded into a neural network. The embedded information acquisition unit 126 may acquire the embedded information from the outside. The embedded information acquisition unit 126 may generate the embedded information by acquiring target information to be embedded and reversibly converting the target information.

The generation unit 130 generates an embedded neural network in which the embedded information acquired by the embedded information acquisition unit 126 is embedded into an element of a neural network. The generation unit 130 may generate an embedded neural network in which the embedded information is embedded into at least one of a node, a weight, a bias, a layer, or a function of the neural network.

As described above, the embedded information may be a sequence of numbers. The embedded information may be a numerical value. The embedded information may be in ASCII code. The embedded information may not be the sequence of numbers or the numerical value.

For example, the generation unit 130 embeds embedded information into some weights among a plurality of weights of a neural network. The generation unit 130 may generate an embedded neural network in which some weights among a plurality of weights of a neural network are regarded as embedded information.

The generation unit 130 may determine a number of at least one weight for embedding the embedded information, based on a size of the embedded information. The generation unit 130 may determine a number of at least one weight into which the embedded information can be embedded, according to the size of the embedded information. The generation unit 130 may embed the embedded information in a distributed manner into the determined number of weights among the plurality of weights of the neural network. For example, the generation unit 130 may embed the embedded information by dividing the embedded information into the determined number of pieces and regarding each piece of the embedded information as each of the determined number of weights.

The generation unit 130 may determine the number of at least one weight for embedding the embedded information, based on a number of at least one piece of the embedded information. The generation unit 130 may determine the number of at least one weight corresponding to the number of at least one piece of the embedded information. The generation unit 130 may embed the embedded information into each of the determined number of weights among the plurality of weights of the neural network. For example, the generation unit 130 may embed the embedded information by regarding each of a plurality of pieces of the embedded information as each of the determined number of weights.

The generation unit 130 may determine the number of at least one weight for embedding the embedded information, based on the size of the embedded information and the number of at least one piece of the embedded information. The generation unit 130 may determine the number of at least one weight into which the embedded information can be embedded, according to the size of the embedded information and the number of at least one piece of the embedded information.

After regarding as embedded information, some weights among a plurality of weights of an untrained neural network, the generation unit 130 may execute training using the training information acquired by the training information acquisition unit 122 so as not to change the some weights and generate an embedded neural network. The generation unit 130 may generate weight position information indicating positions of the some weights in the embedded neural network. As a result, a trained embedded neural network in which embedded information is embedded into some weights can be generated.

The generation unit 130 may embed embedded information into some weights among a plurality of weights of the trained neural network acquired by the network acquisition unit 124. The generation unit 130 may embed the embedded information into some weights among a plurality of weights of the trained neural network generated by executing training using the training information acquired by the training information acquisition unit 122.

For example, the generation unit 130 generates an embedded neural network in which some weights among a plurality of weights of a trained neural network are regarded as embedded information, and reconstruction information capable of reconstructing the some weights from the embedded information. When one piece of embedded information is embedded into one weight, the generation unit 130 selects one weight from the plurality of weights of the trained neural network and generates an embedded neural network in which the selected weight is changed to the embedded information and reconstruction information capable of reconstructing the selected weight from the embedded information. As a specific example, when the selected weight is 0.5 and the embedded information is 0.18, the generation unit 130 generates an embedded neural network in which the selected weight is changed to 0.18 and reconstruction information including 0.32 obtained by subtracting 0.18 from 0.5. The generation unit 130 may generate an embedded neural network in which the selected weight is changed to 0.18 and reconstruction information including 0.68 obtained by adding 0.18 to 0.5. The generation unit 130 may generate an embedded neural network in which the selected weight is changed to 0.18 and reconstruction information including a mathematical expression capable of calculating 0.5 from 0.18. When one piece of embedded information is embedded into a plurality of weights in a distributed manner, the generation unit 130 may divide the embedded information, select a plurality of weights from a plurality of weights of the trained neural network, and generate an embedded neural network in which each of the plurality of selected weights is used as each piece of divided embedded information and reconstruction information capable of reconstructing the plurality of selected weights from the divided embedded information.

For example, the generation unit 130 identifies some weights having values less than or equal to a predetermined threshold among a plurality of weights of the trained neural network, and generates an embedded neural network in which the some weights are regarded as embedded information and weight position information indicating positions of the some weights in the embedded neural network. The generation unit 130 may identify as many weights as necessary for embedding the embedded information, from the weights having values less than or equal to the predetermined threshold among the plurality of weights of the trained neural network. Any value may be set as the threshold. As the threshold, a value lower than or equal to a value of a weight that does not cause a problem even if ignored may be set. As the threshold, 0 may be set. When processing using the embedded neural network is actually executed, it is possible to operate to ignore the weights indicated by the weight position information.

When embedded information generated by reversibly converting target information is embedded into some weights among a plurality of weights of a neural network, the generation unit 130 may further generate inverse conversion information indicating a method of converting the embedded information into the target information.

For example, the generation unit 130 embeds embedded information into some biases among a plurality of biases of a neural network. The generation unit 130 may generate an embedded neural network in which some biases among a plurality of biases of a neural network are regarded as embedded information.

The generation unit 130 may determine a number of at least one bias for embedding the embedded information, based on a size of the embedded information. The generation unit 130 may determine a number of at least one bias into which the embedded information can be embedded, according to the size of the embedded information. The generation unit 130 may embed the embedded information in a distributed manner into the determined number of biases among the plurality of biases of the neural network. For example, the generation unit 130 may embed the embedded information by dividing the embedded information into the determined number of pieces and regarding each piece of the embedded information as each of the determined number of biases.

The generation unit 130 may determine the number of at least one bias for embedding the embedded information, based on a number of at least one piece of the embedded information. The generation unit 130 may determine the number of at least one bias corresponding to the number of at least one piece of the embedded information. The generation unit 130 may embed the embedded information into each of the determined number of biases among the plurality of biases of the neural network. For example, the generation unit 130 may embed the embedded information by regarding each of a plurality of pieces of the embedded information as each of the determined number of biases.

The generation unit 130 may determine the number of at least one bias for embedding the embedded information, based on the size of the embedded information and the number of at least one piece of the embedded information. The generation unit 130 may determine the number of at least one bias into which the embedded information can be embedded, according to the size of the embedded information and the number of at least one piece of the embedded information.

In a case of a neural network that does not require a bias, the generation unit 130 may embed embedded information in a dummy bias of the neural network.

In a case of a neural network that requires a bias, the generation unit 130 may generate an embedded neural network in which some biases among a plurality of biases of the neural network are regarded as embedded information and reconstruction information capable of reconstructing the some biases from the embedded information. When one piece of embedded information is embedded into one bias, the generation unit 130 selects one bias from a plurality of biases of a trained neural network and generates an embedded neural network in which the selected bias is changed to the embedded information and reconstruction information capable of reconstructing the selected weight from the embedded information. As a specific example, when the selected bias is 0.5 and the embedded information is 0.18, the generation unit 130 generates an embedded neural network in which the selected bias is changed to 0.18 and reconstruction information including 0.32 obtained by subtracting 0.18 from 0.5. The generation unit 130 may generate an embedded neural network in which the selected bias is changed to 0.18 and reconstruction information including 0.5 obtained by adding 0.18 to 0.68. The generation unit 130 may generate an embedded neural network in which the selected bias is changed to 0.18 and reconstruction information including a mathematical expression capable of calculating a value between 0.18 and 0.5. When one piece of embedded information is embedded into a plurality of weights in a distributed manner, the generation unit 130 may divide the embedded information, select a plurality of biases from a plurality of biases of the trained neural network, and generate an embedded neural network in which each of the plurality of selected biases is used as each piece of divided embedded information, and reconstruction information capable of reconstructing the plurality of selected biases from the divided embedded information.

When embedded information generated by reversibly converting target information is embedded into some biases among a plurality of biases of a neural network, the generation unit 130 may further generate inverse conversion information indicating a method of converting the embedded information into the target information.

For example, the generation unit 130 embeds embedded information in some layers among a plurality of layers of a neural network. The generation unit 130 may generate an embedded neural network in which embedded information is embedded into some layers among a plurality of layers of a neural network.

The generation unit 130 may determine a number of at least one layer for embedding the embedded information, based on a size of the embedded information. The generation unit 130 may determine a number of at least one layer into which the embedded information can be embedded, according to the size of the embedded information. The generation unit 130 may embed the embedded information in a distributed manner into the determined number of layers among the plurality of layers of the neural network. For example, the generation unit 130 may divide the embedded information into the determined number of pieces and embed each piece of the embedded information as each of the determined number of layers.

The generation unit 130 may determine a number of at least one layer for embedding the embedded information, based on a number of at least one piece of the embedded information. The generation unit 130 may determine the number of at least one layer corresponding to the number of at least one piece of the embedded information. The generation unit 130 may embed the embedded information into each of the determined number of layers among the plurality of layers of the neural network.

The generation unit 130 may determine the number of at least one layer for embedding the embedded information, based on the size of the embedded information and the number of at least one piece of the embedded information. The generation unit 130 may determine the number of at least one layer into which the embedded information can be embedded, according to the size of the embedded information and the number of at least one piece of the embedded information.

The generation unit 130 may generate an embedded neural network in which embedded information is embedded into some layers among a plurality of layers of a neural network and layer position information indicating positions of the some layers in the embedded neural network. The generation unit 130 may generate a neural network in which embedded information is embedded into a dummy layer among a plurality of layers of a neural network and layer position information indicating a position of the dummy layer in the neural network. Accordingly, when processing using the embedded neural network is actually executed, it is possible to operate to ignore the dummy layer.

The generation unit 130 may generate an embedded neural network in which embedded information is embedded into some layers among a plurality of layers of a neural network and reconstruction information capable of reconstructing data before being applied to the some layers from data applied to the some layers. The generation unit 130 may generate a neural network in which embedded information is embedded into a dummy layer among a plurality of layers of a neural network and reconstruction information capable of reconstructing data before being applied to the dummy layer from data applied to the dummy layer. Accordingly, when processing using the embedded neural network is actually executed, an influence of the dummy layer can be eliminated by the reconstruction information.

When embedded information generated by reversibly converting target information is embedded into some layers among a plurality of layers of a neural network, the generation unit 130 may further generate inverse conversion information indicating a method of converting the embedded information into the target information.

For example, the generation unit 130 embeds embedded information in a plurality of some nodes among a plurality of nodes of a neural network. The generation unit 130 may generate an embedded neural network in which embedded information is embedded into plurality of some nodes among a plurality of nodes of a neural network.

The generation unit 130 may determine a number of at least one node for embedding the embedded information, based on a size of the embedded information. The generation unit 130 may determine a number of at least one node into which the embedded information can be embedded, according to the size of the embedded information. The generation unit 130 may embed the embedded information in a distributed manner into the determined number of nodes among the plurality of nodes of the neural network. For example, the generation unit 130 may embed the embedded information by dividing the embedded information into the determined number of pieces and regarding each piece of the embedded information as each of the determined number of nodes.

The generation unit 130 may determine a number of at least one node for embedding the embedded information, based on a number of at least one piece of the embedded information. The generation unit 130 may determine the number of at least one node corresponding to the number of at least one piece of the embedded information. The generation unit 130 may embed the embedded information into each of the determined number of nodes among the plurality of nodes of the neural network. For example, the generation unit 130 may embed the embedded information by regarding each of a plurality of pieces of the embedded information as each of the determined number of nodes.

The generation unit 130 may determine the number of at least one node for embedding the embedded information, based on the size of the embedded information and the number of at least one piece of the embedded information. The generation unit 130 may determine the number of at least one node into which the embedded information can be embedded, according to the size of the embedded information and the number of at least one piece of the embedded information.

The generation unit 130 may generate an embedded neural network in which embedded information is embedded into some nodes that are not linked to other nodes among a plurality of nodes of a neural network. The generation unit 130 may embed embedded information by using node numbers of some nodes that are not linked to other nodes among a plurality of nodes of a neural network. For example, the generation unit 130 registers in advance an extraction rule of sequentially extracting nodes that are not linked to other nodes among a plurality of nodes of a neural network. The extraction rule indicates, for example, extraction from an input layer side toward an output layer side, starting from a node on an upper side toward a node on a lower side. The generation unit 130 embeds embedded information into a neural network by generating application information that becomes the embedded information when applied to a numerical value configured by a node number extracted according to the rule.

When embedded information generated by reversibly converting target information is embedded into some nodes among a plurality of nodes of a neural network, the generation unit 130 may further generate inverse conversion information indicating a method of converting the embedded information into the target information.

For example, the generation unit 130 embeds embedded information into a function of a neural network. For example, the generation unit 130 generates an embedded neural network by embedding embedded information into a plurality of activation functions of a neural network.

The generation unit 130 may determine a number of at least one activation function for embedding the embedded information, based on a size of the embedded information. The generation unit 130 may determine a number of at least one activation function into which the embedded information can be embedded, according to the size of the embedded information. The generation unit 130 may embed the embedded information in a distributed manner into the determined number of activation functions among the plurality of activation functions of the neural network.

The generation unit 130 may determine a number of at least one activation function for embedding the embedded information, based on a number of at least one piece of the embedded information. The generation unit 130 may determine the number of at least one activation function corresponding to the number of at least one piece of the embedded information. The generation unit 130 may embed the embedded information into each of the determined number of activation functions among the plurality of activation functions of the neural network.

The generation unit 130 may determine a number of at least one activation function for embedding the embedded information, based on the size of the embedded information and the number of at least one piece of the embedded information. The generation unit 130 may determine a number of at least one activation function into which the embedded information can be embedded, according to the size of the embedded information and the number of at least one piece of the embedded information.

The generation unit 130 generates an embedded neural network in which embedded information is embedded into some activation functions among a plurality of activation functions of a neural network and reconstruction information capable of reconstructing the some activation functions from the embedded information. When one piece of embedded information is embedded into one activation function, the generation unit 130 selects one activation function from the plurality of activation functions of the neural network, and generates an embedded neural network in which the embedded information is embedded into the selected activation function and reconstruction information capable of reconstructing the selected activation function from the embedded information. When one piece of embedded information is embedded into a plurality of activation functions in a distributed manner, the generation unit 130 may divide the embedded information, select a plurality of activation functions from a plurality of activation functions of the neural network, and generate an embedded neural network in which each piece of the divided embedded information is embedded into each of the plurality of selected activation functions, and reconstruction information capable of reconstructing the plurality of selected activation functions from the divided embedded information.

In addition, for example, the generation unit 130 generates an embedded neural network by embedding embedded information into a loss function of a neural network. The generation unit 130 may generate an embedded neural network in which embedded information is embedded into a loss function of a neural network and reconstruction information capable of reconstructing the loss function from the embedded information.

When embedded information generated by reversibly converting target information is embedded into a function of a neural network, the generation unit 130 may further generate inverse conversion information indicating a method of converting the embedded information into the target information.

The generation unit 130 may embed the embedded information in a distributed manner into a plurality of elements among a node, a weight, a bias, a layer, and a function of a neural network.

The provision unit 140 provides the embedded neural network generated by the generation unit 130. The provision unit 140 may provide the embedded neural network to the execution apparatus 200. The provision unit 140 may provide the embedded neural network to the communication terminal 30.

The provision unit 140 may provide supplementary information of the embedded neural network in accordance with the embedded neural network. The provision unit 140 may provide reconstruction information. The provision unit 140 may provide weight position information. The provision unit 140 may provide bias position information. The provision unit 140 may provide layer position information. The provision unit 140 may provide application information. The provision unit 140 may provide inverse conversion information.

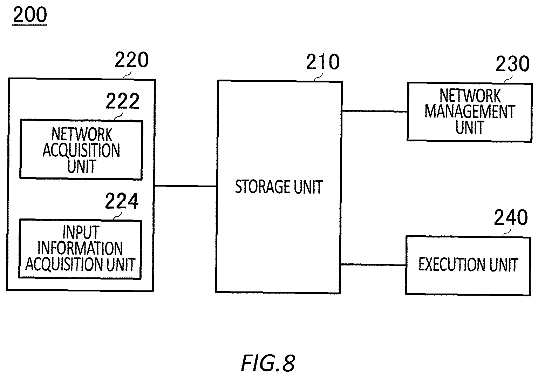

Fig. 8 schematically illustrates an example of a functional configuration of the execution apparatus 200. The execution apparatus 200 includes a storage unit 210, an acquisition unit 220, a network management unit 230, and an execution unit 240.

The acquisition unit 220 acquires various types of information. The acquisition unit 220 stores the acquired information in the storage unit 210. The acquisition unit 220 may include a network acquisition unit 222 and an input information acquisition unit 224.

The network acquisition unit 222 acquires an embedded neural network. The network acquisition unit 222 may acquire the embedded neural network from the generation apparatus 100. The network acquisition unit 222 may acquire the embedded neural network provided by the provision unit 140.

The network acquisition unit 222 may acquire supplementary information of the embedded neural network in accordance with the embedded neural network. The network acquisition unit 222 may acquire reconstruction information. The network acquisition unit 222 may acquire weight position information. The network acquisition unit 222 may acquire bias position information. The network acquisition unit 222 may acquire layer position information. The network acquisition unit 222 may acquire application information. The network acquisition unit 222 may acquire inverse conversion information.

The input information acquisition unit 224 acquires user input information input by the user 40 using the embedded neural network. The input information acquisition unit 224 may acquire the user input information via the communication terminal 30. The input information acquisition unit 224 may acquire the user input information input by the user 40 using an input device of the generation apparatus 100 or the execution apparatus 200.

The network management unit 230 executes management processing of the embedded neural network acquired by the network acquisition unit 222. The network management unit 230 may permit or restrict use of the embedded neural network by the user 40.

For example, the network management unit 230 compares the user input information input by the user 40 who desires to use the embedded neural network with embedded information embedded into the embedded neural network, and permits the use of the embedded neural network by the user 40 when the user input information matches the embedded information. When they do not match, the network management unit 230 restricts the use of the embedded neural network by the user 40. For example, the network management unit 230 prohibits the use of the embedded neural network by the user 40. For example, the network management unit 230 performs control such that information different from output information output from the embedded neural network is output to the user 40.

The execution unit 240 executes processing using the embedded neural network. The execution unit 240 may provide a service using the embedded neural network to the user 40. For example, the execution unit 240 provides a face authentication service to the user 40 by the embedded neural network.

When the embedded neural network is a neural network for performing face authentication, the execution unit 240 executes the face authentication of the user 40 by receiving a face image including a face of the user 40 from the communication terminal 30 used by the user 40, and inputting the face image to the embedded neural network.

The network management unit 230 and the execution unit 240 may prompt the user 40 to input the embedded information before starting the face authentication. The network management unit 230 compares the user input information input by the user 40 with the embedded information embedded into the embedded neural network, and causes the execution unit 240 to execute face authentication processing for the user 40 using the embedded neural network when the user input information matches the embedded information. When they do not match, the network management unit 230 restricts the use of the embedded neural network by the user 40. For example, the network management unit 230 prohibits the execution unit 240 from performing the face authentication processing for the user 40 using the embedded neural network. For example, the network management unit 230 causes the execution unit 240 to execute the face authentication processing for the user 40 using the embedded neural network, and to output, to the user 40, information different from the output information output from the embedded neural network.

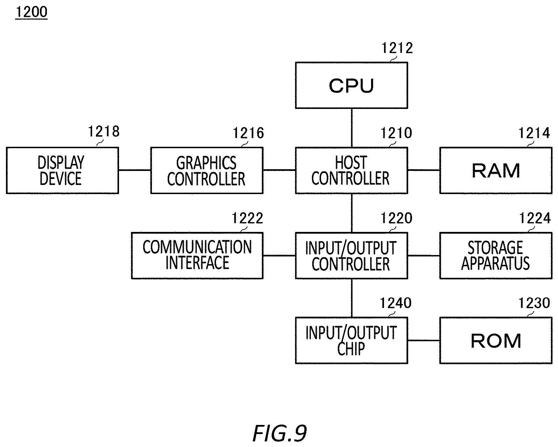

Fig. 9 schematically illustrates an example of a hardware configuration of a computer 1200 functioning as the generation apparatus 100 or the execution apparatus 200. A program installed in the computer 1200 can cause the computer 1200 to function as one or more "units" of an apparatus according to the present embodiment, or cause the computer 1200 to execute operations associated with the apparatus or execute the one or more "units" thereof according to the present embodiment, and/or cause the computer 1200 to execute a process according to the present embodiment or execute stages of the process. Such a program may be executed by a CPU 1212 to cause the computer 1200 to execute particular operations associated with some or all of the blocks in the flowcharts and block diagrams described in the present specification.

The computer 1200 according to the present embodiment includes the CPU 1212, a RAM 1214, and a graphics controller 1216, which are connected to each other via a host controller 1210. The computer 1200 also includes input/output units such as a communication interface 1222, a storage apparatus 1224, a DVD drive and an IC card drive, which are connected to the host controller 1210 via an input/output controller 1220. The DVD drive may be a DVD-ROM drive, a DVD-RAM drive, or the like. The storage apparatus 1224 may be a hard disk drive, a solid-state drive, or the like. The computer 1200 also includes a ROM 1230 and a legacy input/output unit such as a keyboard, which are connected to the input/output controller 1220 via an input/output chip 1240.

The CPU 1212 operates in accordance with the programs stored in the ROM 1230 and the RAM 1214, thereby controlling each unit. The graphics controller 1216 acquires image data which is generated by the CPU 1212 in a frame buffer or the like provided in the RAM 1214 or in itself so as to cause the image data to be displayed on a display device 1218.

The communication interface 1222 communicates with other electronic devices via a network. The storage apparatus 1224 stores a program and data used by the CPU 1212 in the computer 1200. The DVD drive reads a program or data from a DVD-ROM or the like and provides the program or data to the storage apparatus 1224. The IC card drive reads a program and data from an IC card, and/or writes the program and data to the IC card.

The ROM 1230 stores therein a boot program or the like executed by the computer 1200 at the time of activation, and/or a program depending on the hardware of the computer 1200. The input/output chip 1240 may also connect various input/output units via a USB port, a parallel port, a serial port, a keyboard port, a mouse port, or the like to the input/output controller 1220.

A program is provided by a computer readable storage medium such as the DVD-ROM or the IC card. The program is read from the computer readable storage medium, installed into the storage apparatus 1224, the RAM 1214, or the ROM 1230, which are also examples of a computer readable storage medium, and executed by the CPU 1212. Information processing written in these programs is read by the computer 1200, and provides cooperation between the programs and the various types of hardware resources described above. An apparatus or method may be configured by achieving the operation or processing of information in accordance with the usage of the computer 1200.

For example, when a communication is executed between the computer 1200 and an external device, the CPU 1212 may execute a communication program loaded in the RAM 1214 and instruct the communication interface 1222 to perform communication processing based on a process written in the communication program. The communication interface 1222, under control of the CPU 1212, reads transmission data stored on a transmission buffer region provided in a recording medium such as the RAM 1214, the storage apparatus 1224, the DVD-ROM, or the IC card, and transmits the read transmission data to a network or writes reception data received from a network to a reception buffer region or the like provided on the recording medium.

In addition, the CPU 1212 may cause all or a necessary portion of a file or a database to be read into the RAM 1214, the file or the database having been stored in an external recording medium such as the storage apparatus 1224, the DVD drive (DVD-ROM), the IC card, etc., and execute various types of processing on the data on the RAM 1214. Next, the CPU 1212 may write the processed data back into the external recording medium.

Various types of information, such as various types of programs, data, tables, and databases, may be stored in the recording medium to undergo information processing. The CPU 1212 may execute, on the data read from the RAM 1214, various types of processing including various types of operations, information processing, conditional judgement, conditional branching, unconditional branching, information search/replacement, or the like described throughout the present disclosure and designated by instruction sequences of the programs, to write the results back to the RAM 1214. In addition, the CPU 1212 may search for information in a file, a database, or the like in the recording medium. For example, when a plurality of entries, each having an attribute value of a first attribute associated with an attribute value of a second attribute, are stored in the recording medium, the CPU 1212 may search for an entry whose attribute value of the first attribute matches a designated condition, from among the plurality of entries, and read the attribute value of the second attribute stored in the entry, thereby acquiring the attribute value of the second attribute associated with the first attribute that satisfies a predetermined condition.

The above described program or software modules may be stored in the computer readable storage medium on or near the computer 1200. In addition, a recording medium such as a hard disk or a RAM provided in a server system connected to a dedicated communication network or the Internet can be used as the computer readable storage medium, thereby providing the program to the computer 1200 via the network.

Blocks in flowcharts and block diagrams in the present embodiments may represent stages of processes in which operations are executed or "units" of apparatuses responsible for executing operations. A specific stage and "unit" may be implemented by a dedicated circuit, a programmable circuit supplied along with a computer readable instruction stored on a computer readable storage medium, and/or a processor supplied along with the computer readable instruction stored on the computer readable storage medium. The dedicated circuit may include a digital and/or analog hardware circuit, or may include an integrated circuit (IC) and/or a discrete circuit. The programmable circuit may include, for example, a reconfigurable hardware circuit including logical AND, logical OR, logical XOR, logical NAND, logical NOR, and another logical operation, and a flip-flop, a register, and a memory element, such as a field programmable gate array (FPGA), a programmable logic array (PLA), or the like.

The computer readable storage medium may include any tangible device capable of storing an instruction executed by an appropriate device, so that the computer readable storage medium having the instruction stored thereon constitutes a product including an instruction that may be executed in order to provide means for executing an operation designated by a flowchart or a block diagram. Examples of the computer readable storage medium may include an electronic storage medium, a magnetic storage medium, an optical storage medium, an electromagnetic storage medium, a semiconductor storage medium, and the like. A more specific example of the computer readable storage medium may include a FLOPPY (registered trademark) disk, a diskette, a hard disk, a random access memory (RAM), a read-only memory (ROM), an erasable programmable read-only memory (EPROM or flash memory), an electrically erasable programmable read-only memory (EEPROM), a static random access memory (SRAM), a compact disk read-only memory (CD-ROM), a digital versatile disk (DVD), a BLU-RAY (registered trademark) disk, a memory stick, an integrated circuit card, or the like.

The computer readable instructions may include an assembler instruction, an instruction-set-architecture (ISA) instruction, a machine instruction, a machine-dependent instruction, a microcode, a firmware instruction, state-setting data, or either of source code or object code written in any combination of one or more programming languages including an object-oriented programming language such as SMALLTALK (registered trademark), JAVA (registered trademark), and C++, or the like, and a conventional procedural programming language such as a "C" programming language or a similar programming language.

The computer readable instruction may be provided to a general purpose computer, a special purpose computer, or a processor or programmable circuit of another programmable data processing apparatus locally or via a local area network (LAN), a wide area network (WAN) such as the Internet or the like in order that the general purpose computer, the special purpose computer, or the processor or the programmable circuit of another programmable data processing apparatus executes the computer readable instruction to generate means for executing operations designated by the flowchart or the block diagram. Examples of the processor include a computer processor, a processing unit, a microprocessor, a digital signal processor, a controller, a microcontroller, and the like.

While the present invention has been described by way of the embodiments, the technical scope of the present invention is not limited to the above-described embodiments. It is apparent to persons skilled in the art that various alterations or improvements can be added to the above-described embodiments. It is also apparent from the scope of the claims that the embodiments added with such alterations or improvements can be included in the technical scope of the invention.

The operations, procedures, steps, and stages of each process executed by a device, system, program, and method shown in the claims, embodiments, or diagrams can be achieved in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be executed in this order.

### EXPLANATION OF REFERENCES

10: information processing system; 20: network; 30: communication terminal; 40: user; 100: generation apparatus; 110: storage unit; 120: acquisition unit; 122: training information acquisition unit; 124: network acquisition unit; 126: embedded information acquisition unit; 130: generation unit; 140: provision unit; 200: execution apparatus; 210: storage unit; 220: acquisition unit; 222: network acquisition unit; 224: input information acquisition unit; 230: network management unit; 240: execution unit; 300: neural network; 301: node; 302: weight; 303: bias; 304: activation function; 310: input layer; 321: hidden layer; 322: hidden layer; 324: dummy layer; 330: output layer; 351: target node; 352: target weight; 353: target bias; 1200: computer; 1210: host controller; 1212: CPU; 1214: RAM; 1216: graphics controller; 1218: display device; 1220: input/output controller; 1222: communication interface; 1224: storage apparatus; 1230: ROM; and 1240: input/output chip.

## Claims

1. An information processing system comprising:
an embedded information acquisition unit which acquires embedded information; and
a generation unit which generates an embedded neural network in which the embedded information is embedded into an element of a neural network.

2. The information processing system according to claim 1, wherein
the generation unit generates the embedded neural network in which the embedded information is embedded into at least one of a node, a weight, a bias, a layer, or a function of the neural network.

3. The information processing system according to claim 2, wherein
the embedded information is a numerical value, and
the generation unit generates the embedded neural network in which some weights among a plurality of weights of the neural network are regarded as the embedded information.

4. The information processing system according to claim 3, wherein
the generation unit regards, as the embedded information, some weights among a plurality of weights of the neural network which is untrained, and then executes training so as not to change the some weights to generate the embedded neural network.

5. The information processing system according to claim 3 or 4, wherein the generation unit generates the embedded neural network in which some weights among a plurality of weights of the neural network having been trained are regarded as the embedded information, and reconstruction information capable of reconstructing the some weights from the embedded information.

6. The information processing system according to any one of claims 3 to 5, wherein the generation unit identifies some weights each having a value less than or equal to a predetermined threshold among a plurality of weights of the neural network having been trained, and generates the embedded neural network in which the some weights are regarded as the embedded information, and weight position information indicating a position of each of the some weights in the embedded neural network.

7. The information processing system according to any one of claims 1 to 6, wherein
the embedded information acquisition unit acquires the embedded information generated by reversibly converting target information, and
the generation unit generates inverse conversion information indicating a method of converting the embedded information into the target information.

8. The information processing system according to any one of claims 1 to 7, wherein
the generation unit generates the embedded neural network in which network-related information related to the neural network is embedded as the embedded information into an element of the neural network.

9. The information processing system according to claim 8, wherein the generation unit generates the embedded neural network in which a signature of the neural network is embedded as the embedded information into an element of the neural network.

10. The information processing system according to claim 8, comprising:
an input information acquisition unit which acquires user input information input by a user using the embedded neural network; and
a network management unit which restricts use of the neural network by the user when the network-related information embedded into the embedded neural network does not match the user input information.

11. An information processing method which is executed by a computer, comprising:
acquiring embedded information; and
generating an embedded neural network in which the embedded information is embedded into an element of a neural network.

12. A program which causes a computer to perform the information processing method according to claim 11.
